# EUROPEAN PATENT APPLICATION

(11) **EP 4 379 075 A1**
(43) Date of publication of application: **05.06.2024**
(21) Application number: 22848952.2
(22) Date of filing: 31.03.2022
(51) Int. Cl.: C22B 7/00, C22B 26/12

(54) **SYSTEM AND METHOD FOR TREATING WASTE LITHIUM ION BATTERY**

(30) Priority: 27.07.2021 CN 202110848823
(71) Applicant: KAWASAKI JUKOGYO KABUSHIKI KAISHA, Kobe-shi, Hyogo 650-8670 (JP); China Conch Venture Holdings Limited, Wuhu, Anhui, 241136 (CN); Anhui Conch Kawasaki Energy Conservation Equipment Manufacturing Company Limited, Wuhu, Anhui, 241136 (CN)
(72) Inventor: OSAWA, Hiroaki, Hyogo 650-8670 (JP); TAKADA, Shoji, Hyogo 650-8670 (JP); YAMASHITA, Mariko, Hyogo 650-8670 (JP); TSUZAWA, Masaki, Hyogo 650-8670 (JP); NAGAI, Ryosuke, Hyogo 650-8670 (JP); SUGATA, Masahiro, Hyogo 650-8670 (JP); ANDO, Fuminori, Hyogo 650-8670 (JP); LI, Daming, Anhui 241136 (CN); ZHAO, Fengwa, Anhui 241136 (CN); LI, Yang, Anhui 241136 (CN); TANG, Wenfang, Anhui 241136 (CN); SONG, Mingjun, Anhui 241136 (CN); YANG, Hongfeng, Anhui 241136 (CN)
(74) Representative: Leinweber & Zimmermann
(86) International application number: PCT/JP2022/016752
(87) International publication number: WO 2023/007869

(57) **Abstract**

A waste lithium-ion battery processing system is a system for processing a waste lithium-ion battery, the system performing roasting a waste lithium-ion battery whose cathode active material contains phosphorus to obtain a roasted product and immersing the roasted product in water to elute lithium from the roasted product into the water, thereby recovering the lithium from the waste lithium-ion battery. The system includes: mixing equipment that mixes a non-lithium alkali metal salt into the cathode active material contained in the waste lithium-ion battery; and a roaster that roasts, at a predetermined first temperature, a mixture that is obtained from mixing by the mixing equipment. The mixing equipment kneads the alkali metal salt into the cathode active material while grinding the alkali metal salt.

## Description

### Technical Field

The present disclosure relates to a system for and a method of processing a waste lithium-ion battery.

### Background Art

Lithium-ion batteries (LIB) are widely used in electric automobiles, mobile phones, laptop computers, etc. A lithium-ion battery includes a cathode active material, an anode active material, an electrolyte solution, a separator, current collectors, and so forth. Lithium-ion batteries are categorized into multiple types including: an NCM battery whose cathode active material contains nickel, cobalt, manganese, and lithium; and an LFP battery whose cathode active material contains iron, phosphorus, and lithium.

Lithium contained in these lithium-ion batteries is a rare metal. Therefore, there is a desire to recover lithium from lithium-ion batteries that have been used and discarded (i.e., waste lithium batteries).

### Citation List

### Patent Literature

PTL 1: Japanese Laid-Open Patent Application Publication No. 2016-191143
PTL 2: Japanese Laid-Open Patent Application Publication No. 2012-229481

### Summary of Invention

### Technical Problem

In order to recover lithium from a waste lithium-ion battery, it is conceivable to take the following steps: subjecting the waste lithium-ion battery to roasting or the like to thermally decompose the waste lithium-ion battery, thereby obtaining the cathode active material from the waste lithium-ion battery; immersing the obtained cathode active material in water to elute lithium from the cathode active material into the water; and then recovering the lithium.

However, it has been found that, regarding the LFP battery, eluting lithium therefrom by immersion into water is difficult. In Patent Literature 1 mentioned above, a lithium-ion battery is roasted to obtain a powdery and granular material, to which an aqueous solution of alkali metal salt is added, which is then fed into a pressure vessel and mixed therein; thereafter, the mixture is subjected to hydrothermal treatment to be heated, and thereby lithium is extracted. The hydrothermal treatment is performed by heating the mixture in the pressure vessel in a hermetically sealed state. Therefore, there are problems, for example, it is difficult to achieve high treatment capacity, i.e., difficult to achieve high throughput per unit time; the complexity of the treatment facility is high; and operation management is difficult.

Patent Literature 2 discloses that, at oxidizing roasting, an alkaline earth metal hydroxide is added so as to turn fluorine and phosphorus into solid compounds. However, alkaline earth metals are less reactive than alkali metals. Accordingly, there is a possibility that lithium, which is an alkali metal, bonds to phosphate ions, resulting in the formation of water-insoluble lithium phosphate (Li₃PO₄). Moreover, in a case where a phosphorus-containing cathode active material is used in the waste lithium battery, there is a concern that the addition of the alkaline earth metal may not cause the decomposition by the roasting of the cathode active material to progress, and consequently, in such a case, it becomes difficult to elute lithium into water.

The present disclosure has been made to solve the above-described problems, and an object of the present disclosure is to provide a system for and a method of processing a waste lithium-ion battery, the system and the method making it possible to recover lithium from a waste lithium-ion battery whose cathode active material contains phosphorus by eluting the lithium into water without complex process steps, and to increase the elution rate.

### Solution to Problem

In order to achieve the above object, a waste lithium-ion battery processing system according to one aspect of the present disclosure is a system for processing a waste lithium-ion battery, the system performing roasting a waste lithium-ion battery whose cathode active material contains phosphorus to obtain a roasted product and immersing the roasted product in water to elute lithium from the roasted product into the water, thereby recovering the lithium from the waste lithium-ion battery. The system includes: mixing equipment that mixes a non-lithium alkali metal salt into the cathode active material contained in the waste lithium-ion battery; and a roaster that roasts, at a predetermined first temperature, a mixture that is obtained from mixing by the mixing equipment. The mixing equipment kneads the alkali metal salt into the cathode active material while grinding the alkali metal salt.

A waste lithium-ion battery processing method according to another aspect of the present disclosure is a method of processing a waste lithium-ion battery, the method including roasting a waste lithium-ion battery whose cathode active material contains phosphorus to obtain a roasted product and immersing the roasted product in water to elute lithium from the roasted product into the water, thereby recovering the lithium from the waste lithium-ion battery. The method includes: mixing a non-lithium alkali metal salt into the cathode active material contained in the waste lithium-ion battery; and roasting, at a predetermined first temperature, a mixture that is obtained from the mixing. The mixing of the alkali metal salt into the cathode active material includes kneading the alkali metal salt into the cathode active material while grinding the alkali metal salt.

According to the above system or method, before roasting the waste lithium-ion battery, the cathode active material of the waste lithium-ion battery is mixed with the non-lithium alkali metal salt. At the time, the alkali metal salt is, while being ground, mixed into the cathode active material, and as a result, decomposition of the thermally stable cathode active material, which contains phosphorus, is facilitated at the roasting of the cathode active material. Further, since phosphate ions and alkali metal ions can be caused to bond together, the generation of water-insoluble lithium phosphate (Li₃PO₄), which is caused by phosphate ions and lithium contained in the cathode active material bonding together, is suppressed. Thus, according to the above system and method, during the elution, lithium can be prevented from becoming insoluble. Therefore, from the waste lithium-ion battery, whose cathode active material contains phosphorus, lithium can be eluted into water and the eluted lithium can be recovered, without performing complex process steps, and also, the elution rate can be increased.

### Advantageous Effects of Invention

The present disclosure provides advantageous effects of making it possible to recover lithium from a waste lithium-ion battery whose cathode active material contains phosphorus by eluting the lithium into water without complex process steps, and to increase the elution rate of the lithium.

The above object, other objects, features, and advantages of the present disclosure will be made clear by the following detailed description of a preferred embodiment with reference to the accompanying drawings.

### Brief Description of Drawings

FIG. 1 is a schematic process drawing showing process steps performed by a waste lithium-ion battery processing system according to one embodiment of the present disclosure.
FIG. 2 shows a schematic configuration of a thermal decomposer that performs a thermal decomposition step shown in FIG. 1.
FIG. 3 shows a schematic configuration of a recovery system that performs a recovery step shown in FIG. 1.
FIG. 4 shows a schematic configuration of mixing equipment in the processing system of the present embodiment.

### Description of Embodiments

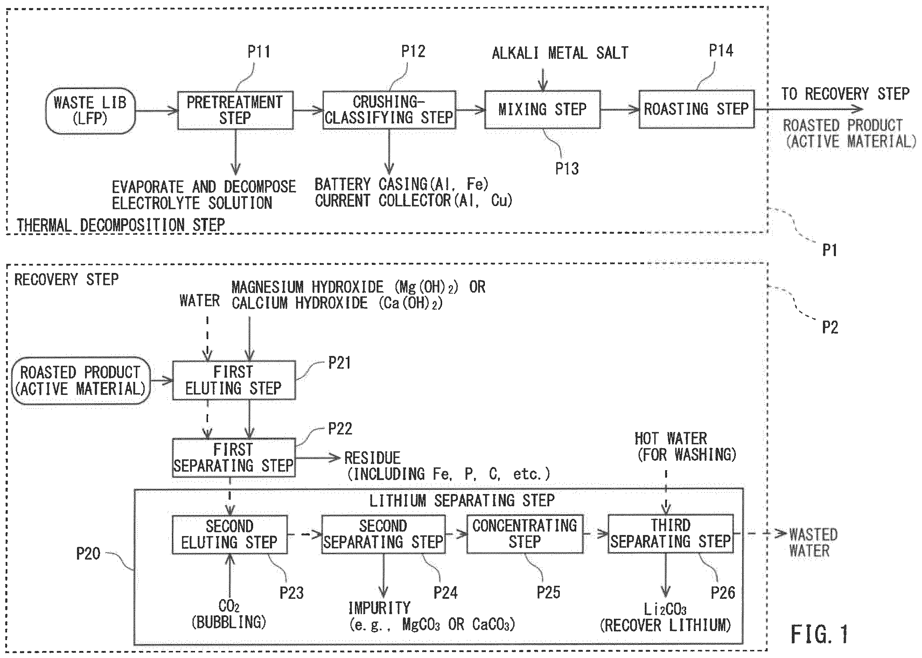

Hereinafter, a preferred embodiment of the present disclosure is described with reference to the drawings. FIG. 1 is a schematic process drawing showing process steps performed by a waste lithium-ion battery processing system according to one embodiment of the present disclosure.

A waste lithium-ion battery (waste LIB) to be processed by the processing system of the present embodiment is a LFP lithium-ion battery whose cathode active material contains phosphorus. More specifically, a LFP battery is a battery including: lithium iron phosphate (LiFePO₄) as a cathode active material; graphite as an anode active material; aluminum foil as a cathode current collector; and copper foil as an anode current collector.

The processing system is intended for processing a large-sized waste LIB, i.e., intended for processing a battery module in which multiple battery cells of waste lithium-ion batteries are combined and also for processing a battery unit in which such battery modules are combined. The battery unit is configured, for example, by accommodating electrically connected battery modules, a controller, and a cooler in a casing. For example, it is assumed that the processing system removes a waste LIB from an electric vehicle or a hybrid automobile, and processes the removed waste LIB, i.e., a battery unit or a battery module, as it is without disassembling it.

As shown in FIG. 1, the processing system of the present embodiment performs process steps including: a thermal decomposition step P1 of thermally decomposing the waste LIB to obtain an active material and roasting a powdery material including the obtained active material; and a recovery step P2 of immersing the roasted active material in water to elute lithium from the roasted active material into the water and then recovering the lithium.

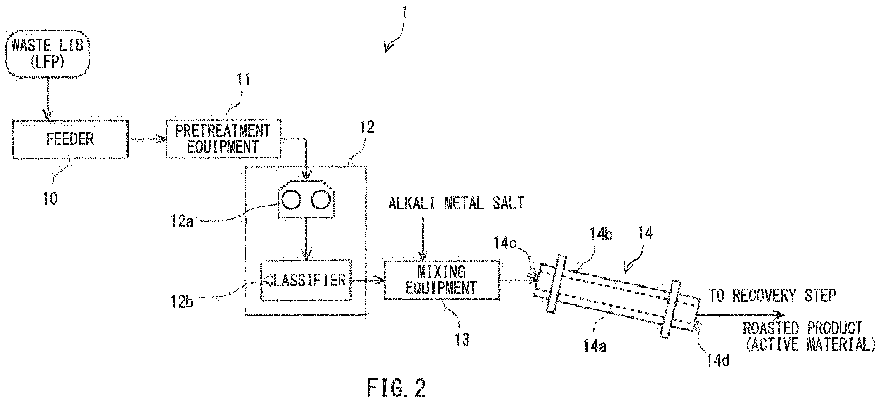

First, the thermal decomposition step P1 is described. The thermal decomposition step P1 includes a pretreatment step P11, a crushing-classifying step P12, a mixing step P13, and a roasting step P14. FIG. 2 shows a schematic configuration of a thermal decomposer that performs the thermal decomposition step shown in FIG. 1. A thermal decomposer 1 includes a feeder 10, pretreatment equipment 11, a crusher-classifier 12, mixing equipment 13, and a roaster 14.

In the pretreatment step P11, in order to decompose and remove the electrolyte solution from the waste LIB, the waste LIB is roasted at a second temperature, which is lower than a first temperature at which roasting is performed in the below-described roasting step P14, i.e., pre-roasted at the second temperature. Accordingly, the feeder 10 feeds the waste LIB to the pretreatment equipment 11. The feeder 10 is, for example, configured as a belt conveyer or the like. The pretreatment equipment 11 is, for example, configured as a grate preheater.

The second temperature in the pretreatment step P11 is set to such a temperature that the electrolyte solution can be decomposed and removed from the waste LIB. For example, the second temperature is higher than or equal to 150°C and lower than 400°C. Alternatively, the second temperature may be higher than or equal to 150°C and lower than or equal to 250°C.

In the crushing-classifying step P12, the waste LIB that has been treated in the pretreatment step P11 is crushed, and an active material is separated and sorted out from a current collector of the crushed waste LIB. Accordingly, the crusher-classifier 12 includes a crusher 12a and a classifier 12b. The crusher 12a is, for example, configured as a roll crusher. The crusher 12a crushes the large-sized waste LIB (battery unit or battery module) into pieces, each of which is roughly in the size of a battery cell or smaller.

The classifier 12b sorts and takes out the active material by separating the active material from the current collector of the waste LIB that has been crushed by the crusher 12a. The classifier 12b is, for example, configured as a sieve shaker or the like. In reality, the classifier 12b takes out not only the cathode active material, but also a small amount of impurities different from the cathode active material, such as the anode active material, and feeds them to the mixing equipment 13. Except these taken-out materials and impurities, exterior materials, current collectors, etc., of the waste LIB are fed to different treatment equipment.

In the mixing step P13, an alkali metal salt is mixed into the active material of the waste LIB that has been sorted out in the crushing-classifying step P12, i.e., mixed into the cathode active material. The mixing equipment 13 mixes the alkali metal salt into the active material and so forth that have been taken out by the classifier 12b. In the present embodiment, at least one alkali metal salt selected from the group consisting of sodium carbonate, potassium carbonate, rubidium carbonate, and cesium carbonate is mixed into the active material. A more detailed configuration of the mixing equipment 13 will be described below.

In the roasting step P14, the mixed waste LIB is roasted at the predetermined first temperature. The mixed waste LIB is a mixture containing the active material of the waste LIB and the alkali metal salt. The roaster 14 is, for example, configured as an external heat type rotary kiln. The external heat type rotary kiln includes a cylindrical body 14a and a heating jacket 14b. The cylindrical body 14a rotates about its center axis. The heating jacket 14b surrounds the outer periphery of the cylindrical body 14a.

One end of the cylindrical body 14a is a receiving inlet 14c, and the other end thereof is a discharging outlet 14d. The cylindrical body 14a is supported in such a manner that it is rotatable about its center axis in a state where the center axis is inclined with a predetermined angle, such that the cylindrical body 14a is sloped downward from the receiving inlet 14c toward the discharging outlet 14d. The waste LIB fed from the mixing equipment 13 to the receiving inlet 14c of the cylindrical body 14a is transported toward the discharging outlet 14d by the rotation of the cylindrical body 14a.

The internal atmosphere of the cylindrical body 14a is the air atmosphere. Alternatively, the internal atmosphere of the cylindrical body 14a may be a reducing atmosphere, or may be a low-oxygen atmosphere having, for example, an oxygen concentration of 10% or lower. Heating gas is supplied to the heating jacket 14b surrounding the outer periphery of the cylindrical body 14a. As a result, the outer wall of the cylindrical body 14a is heated, and the waste LIB transported inside the cylindrical body 14a is heated. Then, the heated waste LIB is discharged through the discharging outlet 14d as a roasted product. The first temperature, which is the roasting temperature in the roasting step P14, is higher than or equal to 400°C, and may be, for example, 700°C.

Thus, the alkali metal salt is mixed into the cathode active material of the waste LIB, which contains lithium and phosphorus, and then the mixture is roasted. As a result, alkali metal ions and phosphate ions in the mixture bond together to form a phosphate. As mentioned above, the alkali metal salt includes at least one of sodium carbonate, potassium carbonate, rubidium carbonate, or cesium carbonate.

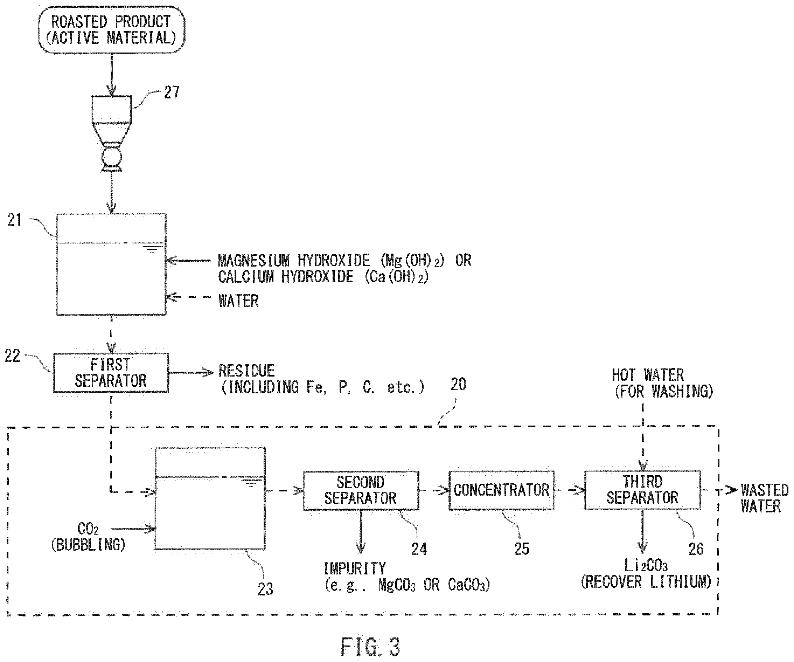

Next, the recovery step P2 is described. The recovery step P2 includes a first eluting step P21, a first separating step P22, and a lithium separating step P20. FIG. 3 shows a schematic configuration of a recovery system that performs the recovery step shown in FIG. 1. A recovery system 2 includes first elution equipment 21, a first separator 22, and a lithium separator 20.

In the first eluting step P21, the roasted product is immersed in water. Accordingly, the first elution equipment 21 is configured such that the roasted product is introduced into an immersion tank in which water is stored. The roasted product is fed, by each predetermined amount, to the immersion tank of the first elution equipment 21 via a hopper 27. As a result, the aqueous solution in the immersion tank turns into a mixture of the water and the roasted product. The first elution equipment 21 includes an agitator (not shown) that agitates the aqueous solution in the immersion tank.

In the first eluting step P21, at the time of immersing the roasted product in the water, magnesium hydroxide (Mg(OH)₂) or calcium hydroxide (Ca(OH)₂) is added thereto. As a result of adding the magnesium hydroxide or calcium hydroxide to the aqueous solution in the immersion tank, iron, phosphorus, and fluorine components in the aqueous solution each form a water-insoluble compound.

In the first separating step P22, the aqueous solution that has been treated in the first eluting step P21 is subjected to solid-liquid separation. Accordingly, the first separator 22 is configured as a solid-liquid separator. By performing the solid-liquid separation by the first separator 22, the aforementioned iron, phosphorus, and fluorine components are removed from the aqueous solution as solid residues.

In the lithium separating step P20, lithium salts, such as Li₂O and Li₂CO₃, in the aqueous solution that has been separated in the first separating step are concentrated into slurry, and the slurry is subjected to solid-liquid separation. The lithium separating step P20 includes a second eluting step P23, a second separating step P24, a concentrating step P25, and a third separating step P26. The lithium separator 20 includes second elution equipment 23, a second separator 24, a concentrator 25, and a third separator 26 to perform the respective steps.

Similar to the first elution equipment 21, the second elution equipment 23 includes an immersion tank and an agitator. The aqueous solution that has gone through the solid-liquid separation by the first separator 22 is introduced into the second elution equipment 23. Further, carbon dioxide, i.e., CO₂, is introduced into the aqueous solution in the immersion tank of the second elution equipment 23. In the second eluting step P23, the aqueous solution stored in the immersion tank of the second elution equipment 23 is subjected to carbon dioxide bubbling.

As a result of the carbon dioxide bubbling, the pH of the aqueous solution is adjusted to weak alkaline. Consequently, an excess portion of the magnesium hydroxide or calcium hydroxide added in the first eluting step P21 is deposited as magnesium carbonate (MgCO₃) or calcium carbonate (CaCO₃).

In the second separating step P24, the aqueous solution that has been treated in the second eluting step P23 is subjected to solid-liquid separation. By performing the solid-liquid separation by the second separator 24, solid impurities including the magnesium carbonate or calcium carbonate deposited from the aqueous solution in the second eluting step P23 are removed from the aqueous solution.

In the concentrating step P25, the aqueous solution that has gone through the solid-liquid separation in the second separating step P24 is concentrated. The concentrator 25 to perform the concentration is, for example, configured as an evaporative concentrator, crystallizer, or the like that heats the aqueous solution to about 80°C to evaporate the water from the aqueous solution. As a result of the aqueous solution being concentrated, the concentration of lithium contained in the aqueous solution increases, so that slurry containing lithium carbonate (Li₂CO₃) is produced.

In the third separating step P26, the slurry is subjected to solid-liquid separation. By performing the solid-liquid separation by the third separator 26, lithium carbonate is deposited from the slurry. In this manner, lithium is recovered in the form of lithium carbonate. The remaining aqueous solution is discarded. Alternatively, the remaining aqueous solution may be returned to the first elution equipment 21 or the second elution equipment 23.

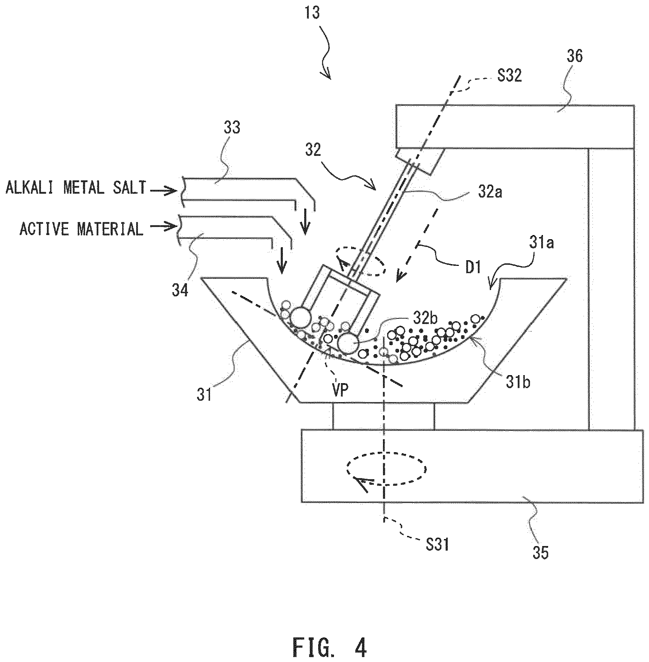

Hereinafter, the mixing equipment 13 of the present embodiment is described in more detail. FIG. 4 shows a schematic configuration of the mixing equipment in the processing system of the present embodiment. FIG. 4 shows a sectional view taken along a virtual plane including a center axis S31 and a center axis S32, which will be described below. The mixing equipment 13 of the present embodiment is configured as a grinding machine. The mixing equipment 13 grinds the alkali metal salt, and while the grinding, kneads the alkali metal salt into the active material and so forth that have been taken out by the classifier 12b. Hereinafter, a more detailed description is given.

The mixing equipment 13 includes a receiving container 31 and a mixer 32. The receiving container 31 includes a mortar-shaped inner surface 31b, within which an accommodator 31a is demarcated. A first feeder 33 feeds the alkali metal salt into the receiving container 31, and a second feeder 34 feeds the active material and so forth that have been taken out by the classifier 12b into the receiving container 31. In this manner, the alkali metal salt and the active material and so forth are accommodated in the accommodator 31a of the receiving container 31.

The receiving container 31 is supported by a base 35, such that the receiving container 31 is rotatable about the center axis S31 of the inner surface 31b of the accommodator 31a. The base 35 includes a driving source, such as a motor, to drive the receiving container 31 to rotate, and thus the receiving container 31 is driven by the driving source to rotate. The center axis S31 extends in the vertical direction.

The proximal end of the mixer 32 is supported by a support 36, which extends upward from the base 35. In the example of FIG. 4, the support 36 is integrally fixed to the base 35. Alternatively, an articulated robot with a predetermined number of degrees of freedom may serve as the support 36. That is, the mixer 32 may be held by the distal end portion of the articulated robot.

The mixer 32 includes: an extension 32a, which extends from the proximal end of the mixer 32 in a first direction D1 to be adjacent to the inner surface 31b of the receiving container 31; and an acting portion 32b located on the distal end of the extension 32a. Multiple distal ends of the acting portion 32b are branched off from the extension 32a.

The center axis S32 of the mixer 32 is inclined relative to the center axis S31 of the receiving container 31. In a plan view, the center axis S32 of the mixer 32 crosses the inner surface 31b at a position that is radially outward of the center axis S31 of the inner surface 31b of the receiving container 31. The mixer 32 is urged by, for example, urging means such as a spring in the first direction D1 to be adjacent to the inner surface 31b of the receiving container 31, i.e., urged in a direction along the center axis S32 of the mixer 32. Consequently, the mixer 32 is kept in the state of being in contact with the inner surface 31b of the receiving container 31 or with the fed materials accommodated in the accommodator 31a of the receiving container 31.

In the state of being urged in the first direction D1, the mixer 32 is rotatable about the center axis S32 of the extension 32a. As a result of the extension 32a rotating about the center axis S32, i.e., as a result of the rotation of the extension 32a about its own axis, multiple distal ends of the acting portion 32b revolve around the center axis S32. That is, as a result of the mixer 32 rotating about the center axis S32, the acting portion 32b of the mixer 32 moves within the receiving container 31 relative to the receiving container 31 within a virtual plane VP, which crosses the first direction D1, i.e., the acting portion 32b revolves. The support 36 includes a driving source, such as a motor, to drive the mixer 32 to rotate, and thus the mixer 32 is driven by the driving source to rotate.

Owing to this configuration, the mixer 32, while in the state of being urged in the first direction D1 to be adjacent to the inner surface 31b of the receiving container 31, moves within the receiving container 31 relative to the receiving container 31 within the virtual plane VP, which crosses the first direction D1. Further, in addition to the above-described motion of the mixer 32, the receiving container 31 rotates about the center axis S31, and consequently, on the inner surface 31b of the receiving container 31, the range of motion of the mixer 32 shifts in the circumferential direction in a relative manner.

In a state where the alkali metal salt and the active material have been fed into the accommodator 31a of the receiving container 31, the mixer 32 and the receiving container 31 operate, and as a result, the alkali metal salt between the distal end of the acting portion 32b of the mixer 32 and the inner surface 31b of the receiving container 31 is ground due to sliding motion of the mixer 32, the sliding motion resulting from: the urging force to urge the mixer 32 toward the receiving container 31; and the motion of the mixer 32 relative to the receiving container 31. The ground alkali metal salt is kneaded into the active material.

If the alkali metal salt is simply subjected to agitation, the alkali metal salt tends to agglomerate by absorbing, for example, moisture in the air. For this reason, the alkali metal salt is kneaded into the active material while being ground. Specifically, by performing the grinding and kneading processes concurrently, the alkali metal salt can be uniformly adhered to the active material.

Further, the mixing equipment 13 is configured such that the alkali metal salt and the active material are fed into the receiving container 31 concurrently. This makes it possible to readily and more uniformly mix the alkali metal salt with the active material.

The urging force to urge the mixer 32 in the first direction D1 is suitably set in accordance with the feeding amount of the alkali metal salt and the active material, the mixing time thereof, a required lithium elution rate, etc. The inventors of the present disclosure conducted diligent studies. As a result of the diligent studies, they have obtained the following findings regarding a relationship among the feeding amount, the urging force, the mixing time, and the lithium elution rate. That is, although the lithium elution rate tends to increase in accordance with increase in the urging force, if the mixing time is set to be long, the magnitude of the urging force is no longer important. In other words, the mixing time contributes to the lithium elution rate more than the magnitude of the urging force does, i.e., the setting of the mixing time is to be prioritized over the setting of the magnitude of the urging force. Moreover, there is a tendency that the greater the feeding amount, the lower the lithium elution rate.

In the mixing step P13 performed with the mixing equipment 13, in a case where the fed materials have concentrated to the peripheral edge of the receiving container 31, an aggregating step of scraping off or gathering the fed materials to the center of the receiving container 31 may be performed. Alternatively, in the mixing step P13, the aggregating step may be performed regularly. The aggregating step may be performed by a person, or the mixing equipment 13 may be configured such that the aggregating step is performable by the mixing equipment 13.

For example, an articulated robot with a predetermined number of degrees of freedom may serve as the support 36, which supports the mixer 32, and in the aggregating step, the articulated robot may be controlled such that the acting portion 32b of the mixer 32 moves on the inner surface 31b of the receiving container 31 from the peripheral edge to the center of the receiving container 31. The aggregating step may be performed by, for example, a robotics device different from the mixing equipment 13.

As described above, according to the above method, before roasting the waste LIB, the cathode active material of the waste LIB, which contains phosphorus and lithium, is mixed with the non-lithium alkali metal salt. At the time, the alkali metal salt is, while being ground, mixed into the cathode active material, and as a result, decomposition of the thermally stable cathode active material, which contains phosphorus, is facilitated at the roasting of the cathode active material. Further, phosphorus and the alkali metal can be caused to bond together before lithium phosphate is generated. For this reason, the generation of water-insoluble lithium phosphate (Li₃PO₄), which is caused by phosphate ions and lithium contained in the cathode active material bonding together, is suppressed. Thus, according to the above method, at the time of immersing the roasted product in water, lithium can be prevented from becoming insoluble. Therefore, from the waste LIB, whose cathode active material contains phosphorus and lithium, the lithium can be eluted into water and the eluted lithium can be recovered, without using acid solution or alkaline solution, or without requiring other complex process steps, and also, the elution rate can be increased.

Further, the waste LIB is subjected to the pretreatment to decompose and remove the electrolyte solution from the waste LIB; the waste LIB that has gone through the pretreatment is crushed; the cathode active material is sorted out from the crushed waste LIB; and then the alkali metal salt is mixed into the cathode active material. In this manner, the cathode active material can be readily mixed with the alkali metal salt, and bonding between phosphorus contained in the cathode active material and the alkali metal can be readily facilitated.

Mixing the cathode active material with the alkali metal salt is performed as an independent step that is different from the pretreatment step P11, the crushing-classifying step P12, or the roasting step P14. This makes it possible to sufficiently mix the cathode active material with the alkali metal salt, and to effectively prevent bonding between lithium and phosphorus during the roasting.

Further, in the present embodiment, a carbonate is fed into the mixing equipment 13 as the alkali metal salt. Carbonates are readily available, less dangerous than, for example, hydroxides, and easy to handle. Therefore, the mixing step P13 can be readily incorporated in the thermal decomposition step at low cost.

For example, the ratio of an alkali metal element content (A) in the alkali metal salt to a phosphorus element content (P) in the cathode active material (i.e., ratio A / P) is greater than or equal to 1.5 and less than or equal to 3.0. An experiment was conducted, in which the roasting in the roasting step P14 was performed for two hours at a roasting temperature of 700°C under the air atmosphere. Also, the weight ratio of the roasted product to water in the first eluting step P21 was set such that the roasted product : water = 1 : 100. The first eluting step P21 was performed at room temperature.

The ratio A / P is, as described above, the mixture ratio of the alkali metal salt to the cathode active material, which is the ratio of the alkali metal element content (A) to the phosphorus element content (P), i.e., a value that is expressed as a mole ratio. In the experiment, a favorable lithium elution rate was achieved when the ratio A / P was greater than or equal to 1.5 and less than or equal to 3.0.

### (Example)

The description hereinafter indicates results of a mixing test in which the above-described mixing equipment 13 was used. A predetermined grinding machine was used as the mixing equipment 13. A predetermined alkali metal salt and a predetermined active material in a predetermined A / P ratio were fed into the receiving container 31, and the mixing equipment 13 was operated to mix them together. The total of the feeding amount of the alkali metal salt and the active material was 6 g. The operating time of the mixing equipment 13, i.e., the mixing time, was set to five minutes for the total feeding amount.

As Comparative Example 1, the same amount of the alkali metal salt and the active material as that in the above Example was fed into a predetermined bottle, and the bottle was shaken for five minutes, which was the same as the mixing time in the above Example. As Comparative Example 2, a simple ball mill was fabricated. The simple ball mill is configured such that a predetermined stainless tubular body with a predetermined amount of 3 mm-diameter alumina balls therein is rotated in a circumferential direction. The rotational axis of the tubular body extends horizontally. The same amount of the alkali metal salt and the active material as that in the above Example was fed into the tubular body of the simple ball mill thus configured, and the tubular body was rotated for two hours.

Thereafter, for each mixture, the recovery step P2 was performed and the lithium elution rate into water was checked. Consequently, in Example, in which the above-described mixing equipment 13 was used, the lithium elution rate was 87.5%, which was a favorable result. On the other hand, in Comparative Example 1, the lithium elution rate was 24.0%. From this, it has been found that by merely mixing the alkali metal salt and the active material together, a favorable lithium elution rate cannot be achieved.

In Comparative Example 2, the lithium elution rate was 70.9%. In Comparative Example 2, although a significantly longer time was taken compared to Example, a sufficient lithium elution rate was not achieved. From this, it is presumed that the alkali metal salt cannot be sufficiently ground by the mixing method using a ball mill.

From the above, it can be understood that, in the mixing step P13 of mixing the active material and the alkali metal salt together, in order to increase the lithium elution rate, it is important to knead the alkali metal salt into the cathode active material while the grinding the alkali metal salt.

From the foregoing description, numerous modifications and other embodiments of the present disclosure are obvious to those skilled in the art. Accordingly, the description is to be construed as illustrative only, and is provided for the purpose of teaching those skilled in the art the best mode of carrying out the present disclosure. The structural and/or functional details may be substantially modified without departing from the scope of the present disclosure.

For example, the above embodiment describes, as one example, a grinding machine as the mixing equipment 13. However, the mixing equipment 13 is not limited to a grinding machine, and may be configured differently, so long as it is configured as mixing equipment that kneads the alkali metal salt into the cathode active material while grinding the alkali metal salt.

For example, the above embodiment describes, as one example, the mixing equipment 13 configured such that the center axis S32 of the mixer 32 is inclined relative to the center axis S31 of the receiving container 31. However, this is merely a non-limiting example. The center axis S32 of the mixer 32 may extend in the vertical direction. Although the above embodiment describes, as one example, the mode in which the receiving container 31 rotates about the center axis S31, the receiving container 31 may be fixed to the base 35.

Further, the above embodiment describes, as one example, the configuration in which the mixer 32 rotates about the center axis S32. However, this is merely a non-limiting example. The mixer 32 may move in a reciprocating manner in a direction crossing the center axis S32, i.e., in a direction crossing the first direction D1. The distal-end acting portion of the mixer 32 may move three-dimensionally. That is, at the time of mixing, the mixer 32 need not be always urged in the first direction D1. The urging force to urge the mixer 32 in the first direction D1 may be changeable stepwise or continuously.

Further, for example, the receiving container 31 may be either mortar-shaped as in the above embodiment, or may have a horizontal or convex bottom surface as with the lower member of a mill, which is called, for example, a lower millstone or fixed millstone. The mixer 32 may be configured as a rod-shaped structure with a distal-end acting portion as in the above embodiment. Specifically, the distal end portion of the mixer 32 may be, for example, pestleshaped or spatula-shaped. Alternatively, the mixer 32 may have a shape corresponding to the receiving container 31, as with the upper member of a mill, which is called, for example, an upper millstone or runner stone.

Thus, the mixing equipment 13 may include a mortar and pestle, or may be configured as a mill. Assume that the mixing equipment 13 is configured as a mill, in which case the receiving container 31 is configured as the lower member of the mill and the mixer 32 is configured as the upper member of the mill. In this case, there may be grooves on at least one of the opposite surfaces of the mill, i.e., on at least one of the millstone surfaces.

The above embodiment describes, as one example, the processing system in which one or more devices or apparatuses correspond to each step. Alternatively, the processing system may be configured such that multiple steps are realized by one or more devices or apparatuses.

The above embodiment describes, as one example, the mode in which the non-lithium alkali metal carbonate that includes at least one of sodium carbonate, potassium carbonate, rubidium carbonate, or cesium carbonate is mixed into the cathode active material of the waste LIB. Alternatively, a non-lithium alkali metal hydroxide may be mixed into the cathode active material of the waste LIB.

### Industrial Applicability

The present disclosure makes it possible to recover lithium from a waste lithium-ion battery whose cathode active material contains phosphorus by eluting the lithium into water without complex process steps, and the present disclosure is useful to increase the elution rate of the lithium.

### Reference Signs List

- 1: thermal decomposer
- 2: recovery system
- 11: pretreatment equipment
- 12: crusher-classifier
- 13: mixing equipment
- 14: roaster
- 20: lithium separator
- 21: first elution equipment
- 22: first separator
- 23: second elution equipment
- 24: second separator

## Claims

1. A system for processing a waste lithium-ion battery, the system performing roasting a waste lithium-ion battery whose cathode active material contains phosphorus to obtain a roasted product and immersing the roasted product in water to elute lithium from the roasted product into the water, thereby recovering the lithium from the waste lithium-ion battery,
the system comprising:
mixing equipment that mixes a non-lithium alkali metal salt into the cathode active material contained in the waste lithium-ion battery; and
a roaster that roasts, at a predetermined first temperature, a mixture that is obtained from mixing by the mixing equipment, wherein
the mixing equipment kneads the alkali metal salt into the cathode active material while grinding the alkali metal salt.

2. The system for processing a waste lithium-ion battery according to claim 1, wherein
the mixing equipment includes:
a receiving container into which the alkali metal salt and the cathode active material are fed; and
a mixer that, in a state of being urged in a first direction to be adjacent to an inner surface of the receiving container, moves within the receiving container relative to the receiving container in a second direction crossing the first direction.

3. The system for processing a waste lithium-ion battery according to claim 2, wherein
the mixing equipment includes:
a first feeder that feeds the alkali metal salt into the receiving container; and
a second feeder that feeds the cathode active material into the receiving container, and
the mixing equipment is configured such that the alkali metal salt and the cathode active material are fed into the receiving container concurrently.

4. The system for processing a waste lithium-ion battery according to any one of claims 1 to 3, wherein
the mixing equipment includes a grinding machine.

5. A method of processing a waste lithium-ion battery, the method including roasting a waste lithium-ion battery whose cathode active material contains phosphorus to obtain a roasted product and immersing the roasted product in water to elute lithium from the roasted product into the water, thereby recovering the lithium from the waste lithium-ion battery,
the method comprising:
mixing a non-lithium alkali metal salt into the cathode active material contained in the waste lithium-ion battery; and
roasting, at a predetermined first temperature, a mixture that is obtained from the mixing, wherein
the mixing of the alkali metal salt into the cathode active material includes kneading the alkali metal salt into the cathode active material while grinding the alkali metal salt.
